# DEMANDE DE BREVET EUROPEEN

(11) **EP 2 147 588 A1**
(43) Date de publication de la demande: **27.01.2010**
(21) Numéro de dépôt: 09165614.0
(22) Date de dépôt: 16.07.2009
(51) Int. Cl.: A01C 7/04, A01C 7/08

(54) **Semoir monograine pneumatique**

(30) Priorité: 22.07.2008 FR 0854967
(71) Demandeur: KUHN S.A., 67700 Saverne (FR)
(72) Inventeur: Hironimus, Jeannot, 67440, SCHWEBWILLER (FR)

(57) **Abrégé**

La présente invention concerne un semoir (1) monograine pneumatique comportant une turbine (11) destinée à créer une dépression d'air, ladite turbine (11) présentant une ouverture d'aspiration (13) et un échappement (14) pour l'évacuation de l'air.

Le semoir (1) est remarquable en ce qu'il est équipé d'un dispositif (16) pour humidifier l'air évacué par ledit échappement (14).

## Description

La présente invention se rapporte au domaine technique général des machines agricoles et en particulier à un semoir monograine pneumatique comportant une turbine destinée à créer une dépression d'air, ladite turbine présentant une ouverture d'aspiration et un échappement pour l'évacuation de l'air. L'invention trouve son application dans le domaine du semoir monograine pneumatique avec une distribution mécanique des graines à dépression.

L'homme du métier connaît de tels semoirs qui travaillent selon le principe de la distribution des graines par dépression d'air. Les graines provenant de la trémie sont stockées dans un carter dans la partie basse de la chambre de sélection. De là, elles sont aspirées par la dépression qui en plaque une ou plusieurs sur chaque perforation du disque. Pendant la rotation du disque, les graines passent devant le sélecteur qui n'en laisse qu'une par perforation. Au point bas, l'aspiration cesse derrière le disque et les graines sont libérées et tombent par gravité dans le sillon. La dépression d'air est générée par une turbine, cet air est ensuite simplement évacué par l'échappement de ladite turbine. La position et l'angle de l'échappement pour l'évacuation de l'air sont variables selon les constructeurs. Ainsi, les poussières se déplacent dans l'atmosphère et se déposent plus ou moins rapidement au sol.

Les graines semées sont généralement enrobées de matières actives (produits systémiques, produits de contact) pour une protection efficace contre différentes maladies et ravageurs. Le traitement des semences est indispensable pour lutter contre les maladies transmises par les semences et pour protéger les jeunes plantes contre les parasites naturellement présents dans le sol. Ces graines enrobées subissent de multiples contraintes, de chocs entre le conditionnement et le semis qui génèrent des poussières qui se retrouvent dans les trémies. Ces poussières risquent d'être aspirées et projetées dans l'environnement lors du semis. Ces poussières rejetées par l'échappement de la turbine sont plus ou moins chargées en matières actives, ce qui engendre un danger à la fois pour l'agriculteur et pour l'environnement.

Dans le document DE 10 2005 024 739**,** l'échappement de la turbine est dirigé vers le sol par l'intermédiaire d'un tuyau et est évacué par la poutre du châssis. La poutre comporte des ouvertures vers le bas à cet effet. Ces ouvertures s'étendent à une distance d'environ 50 cm par rapport au sol. En faisant déboucher l'air pollué avec des poussières chargées en matières actives d'une telle hauteur, les poussières se propagent encore dans l'atmosphère et ne se déposent que tardivement au sol. En effet, lors du semis, le tracteur déplaçant le semoir sur le champ à ensemencer crée un mouvement d'air qui a tendance à soulever les poussières. Elles se déplacent donc plus loin et ne se déposent que plus tard au sol. Ce phénomène est encore accentué lorsqu'il y a du vent, car les poussières s'envolent. Le vent augmentant la dérive des poussières. Ces poussières peuvent même être transportées jusqu'à des cultures avoisinantes soufflées par le vent.

La présente invention a pour but de remédier aux inconvénients précités. Elle doit notamment proposer une solution pour que les poussières cessent de se déplacer et se déposent plus rapidement au sol.

A cet effet, une importante caractéristique de l'invention consiste en ce que ledit semoir est équipé d'un dispositif pour humidifier l'air évacué par ledit échappement. Grâce au dispositif d'humidification, les poussières sont captées par l'eau et se déposent plus rapidement au sol.

Selon une autre importante caractéristique de l'invention, l'air de l'échappement est évacué par l'intermédiaire d'au moins un tuyau débouchant au moins sensiblement en direction du sol et au moins une buse de pulvérisation est liée à chaque tuyau. Ladite buse de pulvérisation est disposée sensiblement au voisinage de l'extrémité du tuyau. Ainsi les poussières sont captées directement à la sortie du tuyau et elles se déposent rapidement au sol, puisqu'elles sont chargées en eau. La diffusion des poussières dans l'atmosphère est par conséquent supprimée.

D'autres caractéristiques et avantages de l'invention se dégageront des revendications et de la description qui vont suivre des exemples de réalisation non limitatifs de l'invention avec référence aux dessins annexés dans lesquels :
- la **figure 1** représente une vue de côté du semoir selon l'invention lié à un tracteur,
- la **figure 2** représente une vue arrière schématique d'une partie du semoir.

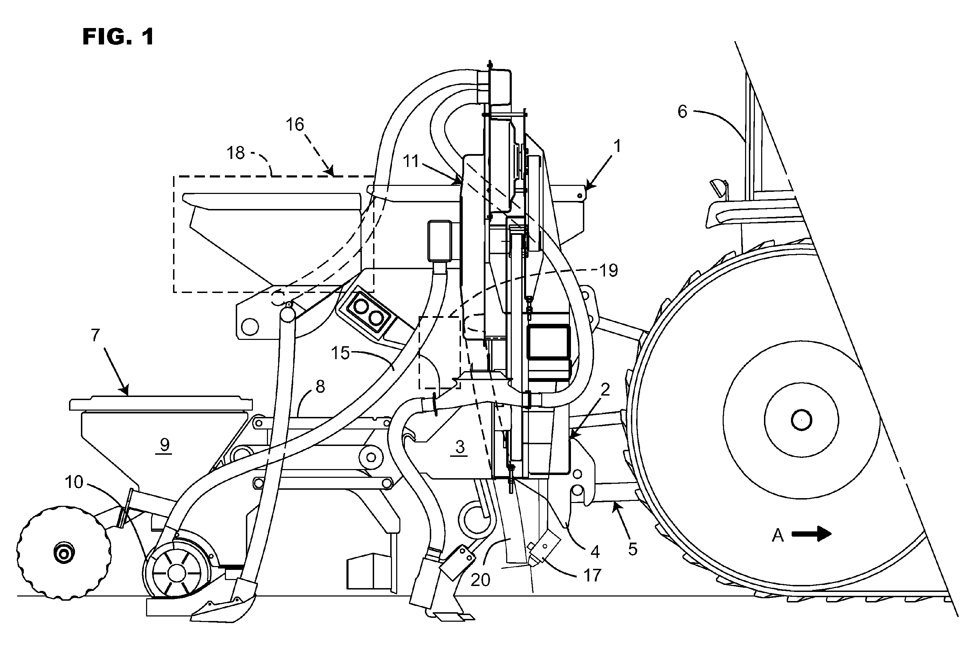

Telle qu'elle est représentée sur la figure 1, la machine agricole représentée est un semoir (1) de précision monograine. Ce semoir (1) comporte un châssis (2) comprenant une poutre principale (3) s'étendant sensiblement perpendiculairement à la direction d'avance (A) et une structure d'attelage (4) qui est liée à un système d'attelage (5) d'un tracteur (6). Sur cette poutre principale (3), sont répartis des éléments semeurs (7). Ils sont fixés à des intervalles réguliers sur la poutre (3) par l'intermédiaire d'un parallélogramme déformable (8). Ce dernier permet à chaque élément semeur (7) de suivre les irrégularités du sol. Chaque élément semeur (7) comporte une trémie (9) destinée à contenir des graines et une distribution (10) qui a pour rôle d'extraire une à une les graines de la trémie (9) et de les répartir à intervalle constant dans le sillon.

Le semoir (1) selon l'invention est un semoir monograine pneumatique, la distribution des graines est assistée par un dispositif pneumatique. La sélection des graines est assistée par un flux d'air en dépression. Ce flux d'air est produit par une turbine (11) entraînée par la prise de force du tracteur (6). Une tuyauterie souple relie la turbine (11) aux différents éléments semeurs (7). La distribution (10) est constituée d'un carter de forme générale cylindrique et d'un disque muni de perforations espacées sur sa circonférence. Le disque est monté rotatif sur un axe horizontal à l'intérieur du carter. Le disque sépare le réceptacle à graines de la chambre d'aspiration, de telle sorte que les perforations sont soumises à une dépression et retiennent des graines prélevées dans le réceptacle. La dimension des perforations est inférieure à celle des graines. Pendant leur déplacement angulaire, un sélecteur élimine les graines en double. Lorsque la graine arrive dans la partie inférieure du carter, la dépression cesse et la graine est libérée et tombe par gravité dans le sillon.

La turbine (11) comporte un demi-carter (12) qui est fixé sur le châssis (2). Le châssis (2) comporte à cet effet une structure support sensiblement verticale. Dans ce demi-carter (12) est logé un ventilateur (non représenté). Le demi-carter (12) comporte notamment une ouverture (13), par laquelle l'air est aspiré lorsque le ventilateur est animé en rotation et un échappement (14) pour assurer l'évacuation de l'air aspiré par l'ouverture (13). L'ouverture (13) est avantageusement centrale et l'échappement (14) est périphérique. Dans l'exemple représenté, l'échappement (14) s'étend dans la partie inférieure du demi-carter (12). La dépression d'air nécessaire pour doser les graines est obtenue grâce à la turbine (11). Cette dépression d'air est acheminée de la turbine (11) à chaque élément semeur (7) au moyen d'un tuyau souple (15) respectif.

Selon une importante caractéristique de l'invention, le semoir (1) est équipé d'un dispositif (16) pour humidifier l'air évacué par ledit échappement (14). Le dispositif d'humidification (16) permet de charger les poussières en eau et ainsi elles se déposent plus rapidement au sol.

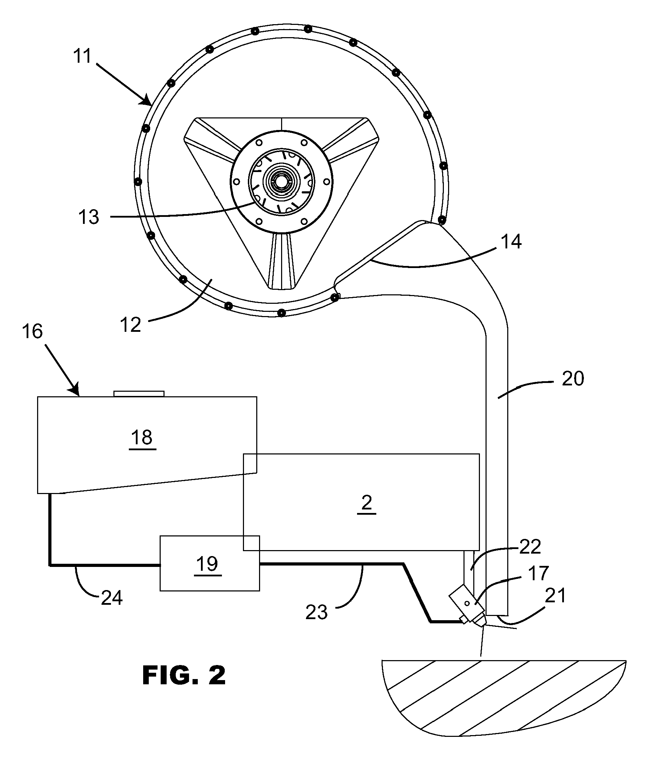

A la lumière de la figure 2, le dispositif d'humidification (16) est composé d'au moins une buse de pulvérisation (17), d'un réservoir (18) capable de contenir un liquide, tel que de l'eau et d'une pompe (19). Le liquide mis sous pression par la pompe (19), est divisé en gouttes par l'intermédiaire de la buse (17). Ainsi un brouillard de fines gouttelettes d'eau est créé pour capturer et abattre les poussières à la sortie de l'échappement (14). Le jet de pulvérisation est de préférence dirigé au moins sensiblement vers le sol. La pression a un effet sur la répartition par son action sur la taille des gouttes et sur l'angle du jet de pulvérisation. D'une façon générale, les gouttes sont d'autant plus fines que le diamètre de la buse (17) est petit et que la pression est élevée. Au niveau de la buse (17), une partie de l'énergie fournie par la pompe (19) sous forme de pression permet la formation des gouttes, l'autre partie leur donne une certaine énergie cinétique, donc de la vitesse.

Le châssis (2) du semoir (1) porte le dispositif d'humidification (16). La buse (17) est liée au châssis (2) par l'intermédiaire d'un bras (22). La buse (17) est avantageusement orientable par rapport au bras (22), elle peut pivoter autour d'un axe sensiblement horizontal. La buse (17) est avantageusement amovible et interchangeable. Le réservoir (18) présente une capacité en adéquation entre les besoins nécessaires et le surpoids du semoir (1). Le liquide contenu dans le réservoir (18) est de l'eau. Un additif pourrait être ajouté dans le réservoir (18). La pompe (19) débite une quantité de liquide déterminée par unité de temps et sous une pression définie qui permet de capter les poussières. La pompe (19) peut être entraînée par la prise de force du tracteur (6) ou d'une autre manière, par exemple électriquement.

D'une manière préférentielle, l'air pollué de l'échappement (14) est évacué vers le sol par l'intermédiaire d'au moins un tuyau (20). L'air pollué est constitué d'un mélange d'air et de poussières chargées en matières actives. Ce tuyau (20) s'étend au moins sensiblement en direction du sol et débouche vers le sol. Pour capter les poussières, au moins une buse (17) est associée à chaque tuyau (20). Le tuyau (20) est avantageusement souple.

Pour permettre un bon captage des poussières, il est particulièrement intéressant de disposer une buse (17) à l'avant d'un tuyau (20) compte tenu de la direction d'avance (A).

Dans l'exemple de réalisation, l'air de l'échappement est évacué par l'intermédiaire d'un tuyau (20) qui débouche sensiblement au niveau du sol. L'extrémité (21) s'étend juste au-dessus du sol. Cet air pollué par les poussières passe donc par le tuyau (20) pour être libéré par son extrémité (21). A l'extrémité (21) du tuyau (20) est associée une buse (17) qui pulvérise, en direction du sol, une certaine quantité de liquide en fines gouttes pour capter les poussières. Les poussières sont ainsi capturées par les fines gouttes d'eau qui les entraînent au sol. Ces fines gouttes, lorsqu'elles sont pulvérisées, ont une certaine vitesse qui emmène les poussières encore plus vite vers le sol. Les poussières se déposent donc rapidement au sol et ne se propagent pas dans l'atmosphère. Pour cela, la buse (17) est reliée à la pompe (19) via un conduit aval (23) et la pompe (19) est, pour sa part, reliée au réservoir (18) via un conduit amont (24). La pompe (19) est capable de prendre l'eau du réservoir (18) et de l'envoyer sous pression dans la buse (17). Pour éviter que des poussières humides s'accumulent à l'intérieur du tuyau (20) et l'obstruent, la buse de pulvérisation (17) est disposée au voisinage de son extrémité (21) proche du sol.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) monograine pneumatique comportant une turbine (11) destinée à créer une dépression d'air, ladite turbine (11) présentant une ouverture d'aspiration (13) et un échappement (14) pour l'évacuation de l'air, ***caractérisé en ce* qu'**il est équipé d'un dispositif (16) pour humidifier l'air évacué par ledit échappement (14).

2. Semoir selon la revendication 1, ***caractérisé en ce* que** ledit dispositif d'humidification (16) est composé d'au moins une buse de pulvérisation (17), d'un réservoir de liquide (18) et d'une pompe (19).

3. Semoir selon la revendication 2, ***caractérisé en ce* que** l'air de l'échappement (14) est évacué par l'intermédiaire d'au moins un tuyau (20) débouchant au moins sensiblement en direction du sol et qu'au moins une buse de pulvérisation (17) est associée à chaque tuyau (20).

4. Semoir selon la revendication 2 ou 3, ***caractérisé en ce* qu'**au moins une desdites buses de pulvérisation (17) est disposée à l'avant dudit tuyau (20), compte tenu de la direction d'avance (A).

5. Semoir selon l'une quelconque des revendications 2 à 4, ***caractérisé en ce* que** le jet de pulvérisation de chaque buse de pulvérisation (17) est dirigé au moins sensiblement vers le sol.

6. Semoir selon l'une quelconque des revendications 2 à 5, ***caractérisé en ce* qu'**au moins une desdites buses de pulvérisation (17) est orientable par rapport audit tuyau (20).

7. Semoir selon l'une quelconque des revendications 2 à 6, ***caractérisé en ce* qu'**au moins une desdites buses de pulvérisation (17) est disposée au voisinage de l'extrémité (21) dudit tuyau (20).

8. Semoir selon l'une quelconque des revendications 2 à 7, ***caractérisé en ce* qu'**au moins une desdites buses de pulvérisation (17) est liée au châssis (2) au moyen d'un bras (22).

9. Semoir selon l'une quelconque des revendications 3 à 5, ***caractérisé en ce* que** ledit tuyau (20) est de préférence souple.
